# EUROPEAN PATENT SPECIFICATION

(11) **EP 1 400 361 B1**
(45) Date of publication and mention of the grant of the patent: **29.03.2006**
(21) Application number: 03254708.5
(22) Date of filing: 28.07.2003
(51) Int. Cl.: B41J 2/47, G06K 15/12, G02B 26/12

(54) **Multi-colour image-forming apparatus**
Mehrfarben-Bilderzeugungsgerät
Appareil de formation d'images à couleurs multiples

(30) Priority: 19.09.2002 KR 2002057243
(43) Date of publication of application: 24.03.2004
(73) Proprietor: SAMSUNG ELECTRONICS CO., LTD., Suwon-si, Gyeonggi-do 442-742 (KR)
(72) Inventor: Yoo, Jae-hwan, Giheung-eub, Yongin-city, Gyunggi-do (KR)
(74) Representative: Geary, Stuart Lloyd

(56) References cited:
- EP-A- 0 589 652
- US-A- 5 625 403
- US-A- 5 666 447

## Description

The present invention relates to a multi-colour image-forming apparatus comprising a plurality of light sources for emitting a plurality of beams, a plurality of photoreceptors for receiving respective beams and an optical multiplexer for wavelength division multiplexing the beams at the beginning of a common path, the common path being disposed between the light sources and the photoreceptors.

Laser printers are well-known apparatuses. A laser printer is an apparatus in which light is scanned across a photoreceptor (or photosensitive) drum to form a latent image in accordance with image data, and toner is electrostatically attracted to the latent image formed by the light. The toner disposed on the photoreceptor drum is then transferred to a print medium, so that an image can be reproduced on the print medium. Laser printers are non-impact type printers, which have the advantages of rapid speed and low noise, and thus they are widely used in various fields.

A monochrome laser beam printer (LBP) is provided with one image-forming apparatus which linearly scans light across the photoreceptor drum, and a colour LBP is provided with four image-forming apparatuses corresponding to each of cyan, yellow, magenta and black.

However, in order to simplify the construction of colour LBPs, a tandem type image-forming apparatus has recently been developed, in which only one image-forming apparatus is applied to the colour LBP. An example of a tandem type image-forming apparatus is disclosed in KR-A-2000-047538.

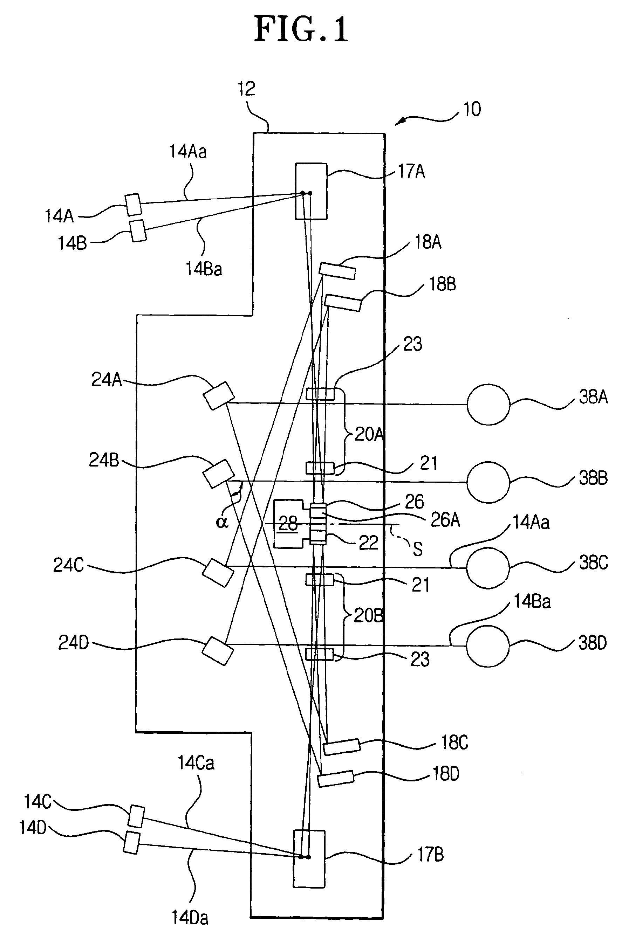

Figure 1 is a schematic view showing the structure of a conventional tandem type image-forming apparatus. The conventional tandem type image-forming apparatus 10 includes an optical case 12, light sources 14A, 14B, 14C, 14D, first reflecting mirrors 17A, 17B, second reflecting mirrors 18A, 18B, 18C, 18D, image-forming lens systems 20A, 20B, cylinder mirrors 24A, 24B, 24C, 24D and a scanning unit 22. The conventional tandem type image-forming apparatus 10 further includes a plurality of synchronization system beam sensors (not shown) to control the horizontal synchronization of a scanning line.

Each of the light sources 14A, 14B, 14C, 14D has a laser diode (not shown) and a collimator lens. The scanning unit 22 has a polygonal mirror 26 and a motor 28 to drive the polygonal mirror 26. In addition, the image-forming lens systems 20A, 20B that are positioned on opposite sides of the scanning unit 22, are each provided with a pair of image-forming lenses 21, 23.

In the conventional tandem type image-forming apparatus 10, laser beams 14Aa, 14Ba emitted from laser diodes 14A, 14B are collimated by a collimating lens and then reflected by a first reflecting mirror 17A. The laser beams 14Aa, 14Ba reflected by the first reflecting mirror 17A are focused on a surface 26A of the polygonal mirror 26 through an image-forming lens system 20A. The laser beams 14Aa, 14Ba focused on the surface 26A of the polygonal mirror 26 are output to second reflecting mirrors 18A, 18B through the image-forming lens system 20A and then output to corresponding cylinder mirrors 24C, 24D. Sequentially, the laser beams 14Aa, 14Ba are reflected from the cylinder mirrors 24C, 24D and then scanned across corresponding photoreceptor drums 38C, 38D. The laser beams 14Aa, 14Ba passing through the image-forming lens system 20A are reflected by the cylinder mirrors 24A, 24B so as to extend parallel to the scanning plane S. The incident and reflected beams of each cylinder mirror 24A, 24B are separated by a predetermined angle α. Similarly laser beams 14Ca, 14Da emitted from the laser diodes 14C, 14D are collimated by a collimating lens and then reflected by a first reflecting mirror 17B and focused on a deflecting surface of the polygonal mirror 26 through an image-forming lens system 20B. The laser beams 14Ca, 14Da focused on the surface of the polygonal mirror 26 are output to second reflecting mirrors 18C, 18D through the image-forming lens system 20B and then output to corresponding cylinder mirrors 24A, 24B. Sequentially, the laser beams 14Ca, 14Da are reflected from the cylinder mirrors 24A, 24B and then scanned across corresponding photoreceptor drums 38A, 38B. The laser beams 14Ca, 14Da passing through the image-forming lens system 20B are reflected by the cylinder mirrors 24C, 24D so as to extend parallel to the scanning plane S. The incident and reflected beams of each cylinder mirror 24C, 24D are separated by a predetermined angle α.

When the laser beams 14Aa, 14Ba, 14Ca, 14Da are emitted from the image-forming apparatus 10 as described above, latent images are formed on corresponding photoreceptor drums 38A, 38B, 38C, 38D and then an image is reproduced on a print medium, in accordance with a conventional printing method.

Since the conventional tandem image-forming apparatus 10 described above requires a large number of optical components for each light source 14A, 14B, 14C, 14D, it has a complicated structure and is difficult to control.

Furthermore, since the conventional image-forming apparatus 10 requires a large number of components, fabrication costs are increased.

Another problem arises, since the laser beams 14Aa, 14Ba, 14Ca, 14Da, which are incident to/output from the image-forming lens systems 20A, 20B, have a predetermined angle with respect to the scanning plane S, which results in a bow of the scanning line. In order to solve this problem, a separate compensating unit is required.

In addition, since the image-forming lens systems 20A, 20B are arranged on opposite sides of the scanning unit 22, two of the four colour image signals are scanned from left to right with respect to a transferring direction of the print medium, whereas the other two are scanned from right to left. This creates the problem that, since the pairs of image signals are scanned in opposite directions, a correct colour image cannot be obtained unless one of the pairs of image signals is inverted. In order to overcome this problem additional devices for controlling the image signals are required.

A multi-colour image-forming apparatus, according to the present invention, is characterised by an optical demultiplexer for demultiplexing the beams at the end of the common path.

Preferably, the optical multiplexer comprises a plurality of dichroic mirrors. More preferably, the dichroic mirrors are disposed in a row perpendicular to the incident beams.

Preferably, the optical demultiplexer comprises a plurality of dichroic mirrors.

Preferably, the optical multiplexer and the optical demultiplexer comprise optical members having different reflection and transmission regions according to the wavelengths of the respective incident beams. More preferably, the optical members each comprise transparent glass on which a dichroic material is coated.

Preferably, the optical multiplexer comprises a plurality of band pass filters.

Preferably, the optical demultiplexer comprises a plurality of band pass filters.

Preferably, the optical multiplexer is disposed between the plurality of light sources and the optical demultiplexer.

Preferably, the apparatus comprises scanning means for scanning the beams across the respective photoreceptors, said scanning means being disposed in the common path. More preferably, the optical demultiplexer is disposed between the scanning means and the photoreceptors. Even more preferably, the scanning means comprises a polygonal mirror. Still more preferably, the apparatus comprises synchronisation system beam sensors for detecting a wavelength division multiplexed beam received from the scanning means.

Preferably, the apparatus comprises a plurality of collimator lenses to collimate the beams emitted from the light sources.

Preferably, the apparatus comprises a lens to focus the light output from the optical multiplexer on a reflecting surface of the scanning means.

Preferably, the apparatus comprises a lens to focus the light reflected by the scanning means on the optical demultiplexer.

Preferably, the apparatus comprises an optical member to selectively transmit or reflect the light which is incident to the synchronisation system beam sensors.

Preferably, the plurality of light sources are disposed so as to emit parallel beams.

Preferably, the light sources are laser diodes.

Preferably, the plurality of photoreceptors are photosensitive drums.

Embodiments of the present invention will now be described, by way of example, with reference to Figures 2 to 5 of the accompanying drawings, in which:
Figure 1 is a schematic view of the internal structure of a conventional tandem type image-forming apparatus;
Figures 2 and 3 are a plan view and a side view, respectively, of the internal structure of an embodiment of an image-forming apparatus according to the present invention;
Figure 4 shows the transmittance characteristics of the second, third and fourth dichroic mirrors of the image-forming apparatus of Figure 3; and
Figure 5 shows the reflection and transmission characteristics desirable for an optical member, such as a dichroic mirror, in an embodiment of the present invention.

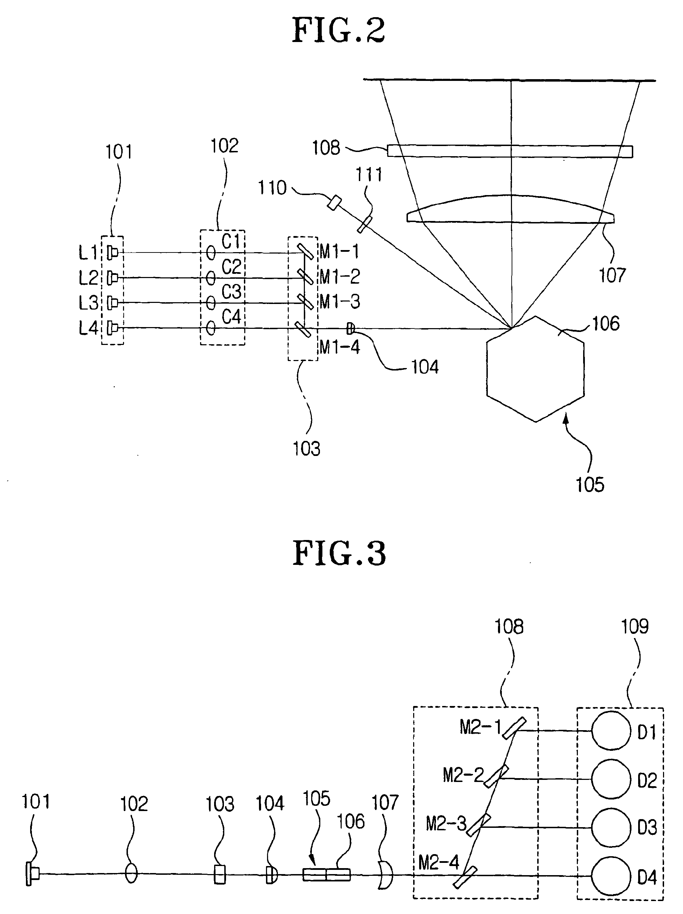

Referring to Figures 2 and 3, an image-forming apparatus (or light scanning device), according to the present invention, includes a light source portion 101 having first, second, third and fourth laser diodes L1, L2, L3, L4, a collimator lens portion 102 having first, second, third and fourth collimator lenses C1, C2, C3, C4, a first optical output portion 103 having first, second, third and fourth dichroic mirrors M1-1, M1-2, M1-3, M1-4, a cylinder lens 104, a scanning unit 105 including a polygonal reflecting mirror 106, an image-forming lens 107, a second optical output portion 108 including fifth, sixth, seventh and eighth dichroic mirrors M2-1, M2-2, M2-3, M2-4, synchronization system beam sensors (or synchronisation detection unit) 110, and a third optical member 111.

The first to fourth diodes L1, L2, L3, L4 of the light source portion 101 are disposed parallel to each other in a row.

The first to fourth collimator lenses C1, C2, C3, C4 are disposed in a row corresponding to respective laser diodes L1, L2, L3, L4 so as to collimate the laser beams emitted from each laser diode L1, L2, L3, L4.

The first to fourth dichroic mirrors M1-1, M1-2, M1-3, M1-4 of the first optical output portion 103 are disposed to reflect or transmit the light, which is transmitted through each of the collimator lenses C1, C2, C3, C4 and input to each respective dichroic mirror, and form a single output path at its end-most portion. As shown in Figure 2, each of the first to fourth dichroic mirrors M1-1, M1-2, M1-3, M1-4 is inclined such that the respective laser beams incident on the first to third dichroic mirrors M1-2, M1-2, M1-3 are each reflected at a right angle. The first to fourth dichroic mirrors M1-1, M1-2, M1-3, M1-4 are entirely disposed in a row. However, the first to fourth laser diodes L1, L2, L3, L4 and the first to fourth collimator lenses C1, C2, C3, C4 need not be disposed in a row, and may be disposed at different distances from the first optical output portion 103 in accordance with the respective wavelengths of the laser beams. Furthermore, although the first to fourth dichroic mirrors M1-1, M1-2, M1-3, M1-4 are vertically disposed, this should not be considered as limiting. For example, these elements may be inclined so that the incident light can be reflected at a desired constant angle. In addition, all of the first to fourth dichroic mirrors M1-1, M1-2, M1-3, M1-4 need not be dichroic mirrors. For example, in the case of the first dichroic mirror M1-1, a conventional reflecting mirror may be used.

The cylinder lens 104 focuses the light output from the first optical output portion 103 on a polygonal mirror 106 of the scanning unit 105.

The scanning unit 105 includes a motor (not shown) and the polygonal mirror 106, and reflects the light transmitted through the cylinder lens 104 at a predetermined angle.

The image-forming lens 107 transmits the light reflected by the scanning unit 105 to the second optical output portion 108.

The second optical output portion 108 receives the light transmitted through the image-forming lens 107 at its front-most portion, and reflects or transmits the light at the fifth to eighth dichroic mirrors M2-1, M1-2, M1-3, M2-4 in accordance with the wavelength of the light, such that the light is scanned to corresponding photoreceptor (or photosensitive) drums D1, D2, D3, D4.

The second optical output portion 108 receives a plurality of beams of different wavelengths along a common input path and outputs the beams along separate output paths in accordance with wavelength, i.e. it demultiplexes the beams. In contrast, the first optical output portion 103 receives a plurality of beams of different wavelengths along separate input paths and then outputs the beams along a common output path, i.e. it multiplexes the beams. However, both the first and second optical output portions 103, 108 have the same or similar structures with respect to the reflection and transmission of the beams according to wavelength, therefore, a detailed description of the second optical output portion 108 will be omitted.

In the image-forming apparatus described above, the light, which is emitted from the first to fourth laser diodes L1, L2, L3, L4 of the light source portion 101 in accordance with an image to be printed, is collimated by corresponding collimator lenses C1, C2, C3, C4 of the collimator lens portion 102, and is then incident on the corresponding first to fourth dichroic mirrors M1-1, M1-2, M1-3, M1-4. The laser beams output from the laser diodes L1, L2, L3, L4 of the light source portion 101 have different wavelengths, respectively. For example, the first laser diode L1 emits light having a wavelength of 650nm, and the second, third and fourth laser diodes emit laser beams having wavelengths of 780nm, 850nm and 950nm, respectively.

When the laser beams of different wavelengths are incident on the first optical output portion 103, the first to fourth dichroic mirrors M1-1, M1-2, M1-3, M1-4 selectively reflect or transmit the laser beams and then output the laser beams from the end-most portion along a single output path to the scanning unit 105. More specifically, the fourth dichroic mirror M1-4 transmits the light which is output from the fourth collimator lens C4, whereas the first to third dichroic mirrors M1-1, M1-2, M1-3 reflect the light, which is output from the first to third collimator lenses C1, C2, C3 repectively, in a vertical direction. The second to fourth dichroic mirrors M1-2, M1-3, M1-4 selectively reflect or transmit the laser beams reflected from the first to third dichroic mirrors M1-1, M1-2, M1-3 according to the wavelength of the laser beams, and then these laser beams are reflected by the fourth dichroic mirror M1-4 to the scanning unit 105.

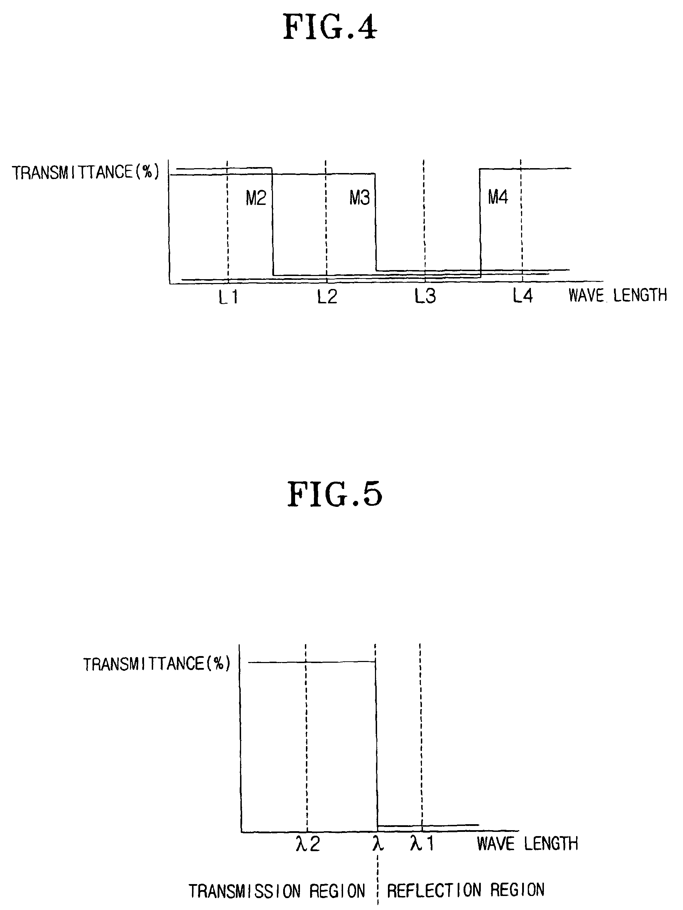

Referring to Figure 5, λ is the wavelength at the boundary between the transmission region and the reflection region of an optical member, such as a dichroic mirror of the first or second optical output portions 103, 108. Light having a wavelength which lies in the transmission region of the optical member, for example λ2, is transmitted through the optical member, whereas light having a wavelength lying in the reflection region, for example λ1, is reflected by the optical member. As shown in Figure 5, λ1 >λ2, however, it could be the case the wavelengths shorter than the boundary wavelength λ are reflected and those longer than the boundary wavelength λ are transmitted, as is the case with the dichroic mirror M1-4 of the present embodiment.

Referring to Figure 4, on the basis of the above-described optical characteristics of the optical member, reflection and transmission characteristics of the first to fourth dichroic mirrors M1-1, M1-2, M1-3, M1-4 will be described. The first dichroic mirror M1-1 is a conventional reflecting mirror, to reflect the light emitted from the first to fourth laser diodes L1, L2, L3, L4. The second dichroic mirror M1-2 transmits the light emitted from the first laser diode L1 but reflects the light emitted from the second to fourth laser diodes L2, L3, L4. The third dichroic mirror M1 -3 transmits the light emitted from the first and second laser diodes L1, L2 but reflects the light emitted from the third and fourth laser diodes L3, L4. The fourth dichroic mirror M1-4 reflects the light emitted from the first to third laser diodes L1, L2, L3 but transmits the light emitted from the fourth laser diode L4.

Due to the characteristics described above, the light emitted from the first laser diode L1 is reflected from a surface of the first dichroic mirror M1-1, transmitted through the second and third dichroic mirrors M1-2, M1-3 and reflected by the fourth dichroic mirror M1-4 to the cylinder lens 104. The light emitted from the second laser diode L2 is reflected by a surface of the second dichroic mirror M1-2, transmitted through the third dichroic mirror M1-3 and reflected by the fourth dichroic mirror M1-4 to the cylinder lens 104. The light emitted from the third laser diode L3 is reflected by the third dichroic mirror M1-3 and reflected again by the fourth dichroic mirror M1-4 to the cylinder lens 104. The light emitted from the fourth laser diode L4 is transmitted through the fourth dichroic mirror M1-4 to the cylinder lens 104. That is, since the laser beams which are incident on the cylinder lens 104 have the same output path regardless of their wavelength, in the region of the light path from the cylinder lens 104 to the image-forming lens 107, the image-forming apparatus resembles a mono laser beam printer using a single laser diode.

The combined laser beam, which comprises the plurality of wavelength components is transmitted through the image-forming lens 107, and is selectively reflected by or transmitted through the fifth to eighth dichroic mirrors M2-1, M2-2, M2-3, M2-4 of the second optical output portion 108, before being output to corresponding photoreceptor drums D1, D2, D3, D4. In this embodiment, the arrangement of each of the dichroic mirrors M2-1, M2-2, M2-3, M2-4 of the second optical output portion 108 is applied in the same way as that of each dichroic mirror M1-1, M1-2, M1-3, M1-4 of the first optical output portion 103. In other words, the laser beam emitted from the fourth laser diode L4 is transmitted through the eighth dichroic mirror M2-4 and is then output to the fourth photoreceptor drum D4. The laser beam emitted from the third laser diode L3 is reflected by the eighth dichroic mirror M2-4, reflected again by the seventh dichroic mirror M2-3 and is then output to the third photoreceptor drum D3. The light emitted from the second dichroic mirror L2 is reflected by the eighth dichroic mirror M2-4, transmitted through the seventh dichroic mirror M2-3, reflected again by the sixth dichroic mirror M2-2 and then output to the second photoreceptor drum D2. The light emitted from the first laser diode L1 is reflected by the eighth dichroic mirror M2- 4, transmitted through the sixth and seventh dichroic mirrors M2-3, M2-2 in turn, reflected again by the fifth dichroic mirror M2-1 and then output to the first photoreceptor drum D1.

In order to control the horizontal synchronization of the scanning line scanned across each photoreceptor drum D1, D2, D3, D4, the synchronization system beam sensors 110 detect a laser beam reflected at a desired position of the scanning unit 105 and then send a signal to a control unit (not shown) of the system. At this time, the third optical member 111 for selectively reflecting or transmitting the laser beam may be disposed or omitted on the light path along which the light is incident to the synchronization system beam sensors 110. Since the synchronization system beam sensors 110 detect a laser beam which is equivalent to that which is scanned to each photoreceptor drum D1, D2, D3, D4, it is possible to synchronize the four scanning lines using only one set of synchronization system beam sensors 110 without the need for separate synchronization system beams sensors for each photoreceptor drum D1, D2, D3, D4.

In the tandem type image-forming apparatus described above, by using the arrangement of a light source emitting light beams with different wavelengths and optical members having various reflection and transmission regions corresponding to the wavelengths of the light beams, the light beams are transmitted along a single output path to the scanning unit 105. The light corresponding to each colour signal is output from the scanning unit 105 along a single path, and then scanned through the optical members onto a different photoreceptor drum corresponding to each colour signal. Thus an image-forming apparatus having a simple structure and a small size is provided.

Furthermore, since it is possible to control the horizontal synchronization of the light scanned across each photoreceptor drum using only one set of synchronization system beam sensors, separate compensating units are not needed to compensate for the bow of the scanning line according to the synchronization detection adjusting unit or the image data. Therefore, fabrication costs are reduced.

## Claims

1. A multi-colour image-forming apparatus comprising a plurality of light sources (L1, L2, L3, L4) for emitting a plurality of beams, a plurality of photoreceptors (D1, D2, D3, D4) for receiving respective beams and an optical multiplexer (103) for wavelength division multiplexing the beams at the beginning of a common path, the common path being disposed between the light sources (L1, L2, L3, L4) and the photoreceptors (D1, D2, D3, D4), **characterised by** an optical demultiplexer (108) for demultiplexing the beams at the end of the common path.

2. An apparatus according to claim 1, wherein the optical multiplexer (103) comprises a plurality of dichroic mirrors (M1-1, M1-2, M1-3, M1-4).

3. An apparatus according to claim 2, wherein the dichroic mirrors (M1-1, M1-2, M1-3, M1-4) are disposed in a row perpendicular to the incident beams.

4. An apparatus according to claim 1, wherein the optical demultiplexer (108) comprises a plurality of dichroic mirrors (M2-1, M2-2, M2-3, M2-4).

5. An apparatus according to claim 1, wherein the optical multiplexer (103) and the optical demultiplexer (108) comprise optical members (M1-1, M1-2, M1-3, M1-4, M2-1, M2-2, M2-3, M2-4) having different reflection and transmission regions according to the wavelengths of the respective incident beams.

6. An apparatus according to claim 5, wherein the optical members (M1-1, M1-2, M1-3, M1-4, M2-1, M2-2, M2-3, M2-4) each comprise transparent glass on which a dichroic material is coated.

7. An apparatus according to claim 1, wherein the optical multiplexer (103) comprises a plurality of band pass filters.

8. An apparatus according to claim 1, wherein the optical demultiplexer (108) comprises a plurality of band pass filters.

9. An apparatus according to claim 1, wherein the optical multiplexer (103) is disposed between the plurality of light sources (L1, L2, L3, L4) and the optical demultiplexer (108).

10. An apparatus according to any preceding claim, comprising scanning means (105) for scanning the beams across the respective photoreceptors (D1, D2, D3, D4), said scanning means (105) being disposed in the common path.

11. An apparatus according to claim 10, wherein the optical demultiplexer (108) is disposed between the scanning means (105) and the photoreceptors (D1, D2, D3, D4).

12. An apparatus according to claim 9 or 10, wherein the scanning means (105) comprises a polygonal mirror (106).

13. An apparatus according to claim 9, 10 or 11, comprising synchronisation system beam sensors (110) for detecting a wavelength division multiplexed beam received from the scanning means (105).

14. An apparatus according to any preceding claim, comprising a plurality of collimator lenses (C1, C2, C3, C4) to collimate the beams emitted from the light sources (L1, L2, L3, L4).

15. An apparatus according to any one of claim 10 to 14, comprising a lens (104) to focus the light output from the optical multiplexer (103) on a reflecting surface of the scanning means (105).

16. An apparatus according to any one of claim 10 to 15, comprising a lens (107) to focus the light reflected by the scanning means (105) on the optical demultiplexer (108).

17. An apparatus according to any one of claim 13 to 16, comprising an optical member (111) to selectively transmit or reflect the light which is incident to the synchronisation system beam sensors (110).

18. An apparatus according to any preceding claim, wherein the plurality of light sources are disposed so as to emit parallel beams.

19. An apparatus according to any preceding claim, wherein the light sources (L1, L2, L3, L4) are laser diodes.

20. An apparatus according to any preceding claim, wherein the plurality of photoreceptors (D1, D2, D3, D4) are photosensitive drums.

## Patentansprüche

1. Vorrichtung zur mehrfarbigen Bilderzeugung, die aus einer Vielzahl von Lichtquellen (L1, L2, L3, L4) zum Aussenden einer Vielzahl von Strahlen, einer Vielzahl von Fotoempfängern (D1, D2, D3, D4) zum Empfangen entsprechender Strahlen und einem optischen Multiplexer (103), zum Multiplexen des WellenlängenBereichs der Strahlen am Anfang einer gemeinsamen Bahn, wobei die gemeinsame Bahn zwischen den Lichtquellen (L1, L2, L3, L4) und den Fotoempfängern (D1, D2, D3, D4) angeordnet ist, besteht, charakterisiert durch einen optischen Demultiplexer (108) zum Demultiplexen der Strahlen am Ende der gemeinsamen Bahn.

2. Vorrichtung entsprechend Anspruch 1, worin der optische Multiplexer (103) eine Vielzahl von dichromatischen Spiegeln (M1-1, M1-2, M1-3, M1-4) aufweist.

3. Vorrichtung entsprechend Anspruch 2, worin die dichromatischen Spiegel (M1-1, M1-2, M1-3, M1-4) in einer Reihe, senkrecht zu den einfallenden Strahlen angeordnet sind.

4. Vorrichtung entsprechend Anspruch 1, worin der optische Demultiplexer (108) eine Vielzahl von dichromatischen Spiegeln (M2-1, M2-2, M2-3, M2-4) aufweist.

5. Vorrichtung entsprechend Anspruch 1, worin der optische Multiplexer (103) und der optische Demultiplexer (108) optische Elemente (M1-1, M1-2, M1-3, M1-4, M2-1, M2-2, M2-3, M2-4) aufweist, die verschiedene Reflexions- und Transmissions-Bereiche, entsprechend den Wellenlängen der entsprechenden, einfallenden Strahlen, besitzen.

6. Vorrichtung entsprechend Anspruch 5, worin die optischen Elemente (M1-1, M1-2, M1-3, M1-4, M2-1, M2-2, M2-3, M2-4) jeweils transparentes Glas aufweisen, auf dem ein dichromatisches Material beschichtet ist.

7. Vorrichtung entsprechend Anspruch 1, worin der optische Multiplexer (103) eine Vielzahl von Bereichs-Durchlass-Filtern aufweist.

8. Vorrichtung entsprechend Anspruch 1, worin der optische Demultiplexer (108) eine Vielzahl von Bereichs-Durchlass-Filtern aufweist.

9. Vorrichtung gemäß Anspruch 1, worin der optische Multiplexer (103) zwischen der Vielzahl von Lichtquellen (L1, L2, L3, L4) und den optischen Demultiplexer (108) angeordnet ist.

10. Vorrichtung entsprechend jedem vorausgehenden Anspruch, der Abtast-Einrichtungen (105) zum Abtasten der Strahlen über die entsprechenden Fotoempfänger (D1, D2, D3, D4) aufweist, wobei diese Abtast-Einrichtungen (105) in der gemeinsamen Bahn angeordnet sind.

11. Vorrichtung entsprechend Anspruch 10, worin der optische Demultiplexer (108) zwischen den Abtast-Einrichtungen (105) und den Fotoempfängern (D1, D2, D3, D4) angeordnet ist.

12. Vorrichtung entsprechend Anspruch 9 oder 10, worin die Abtast-Einrichtung (105) einen mehreckigen Spiegel (106) aufweist.

13. Vorrichtung entsprechend Anspruch 9, 10 oder 11, die System-Synchronisations-Strahl-Sensoren (110), zum Erfassen eines, über einen Wellenlängen-Bereich multiplexten Strahl, der von den Abtast-Einrichtungen (105) empfangen wurde, aufweist.

14. Vorrichtung entsprechend jedem vorausgehenden Anspruch, die eine Vielzahl von Kollimations-Linsen (C1, C2, C3, C4) zum Kollimieren der, von den Lichtquellen (L1, L2, L3, L4) ausgesendeten Strahlen, aufweist.

15. Vorrichtung entsprechend jedem der Ansprüche 10 bis 14, die eine Linse (104) aufweist, um das Licht, das vom optischen Multiplexer (103) ausgegeben wird, auf eine reflektierende Oberfläche der Abtast-Vorrichtungen (105) zu fokussieren.

16. Vorrichtung entsprechend jedem der Ansprüche 10 bis 15, die eine Linse (107) aufweist, um das Licht, das von den Abtast-Einrichtungen (105) reflektiert wird, auf den optischen Demultiplexer (108) zu fokussieren.

17. Vorrichtung entsprechend jedem der Ansprüche 13 bis 16, die ein optisches Element (111) aufweist, um selektiv das Licht auszusenden oder zu reflektieren, das auf die System-Synchronisations-Strahl-Sensoren (110) einfällt.

18. Vorrichtung entsprechend jedem vorausgehenden Anspruch, worin die Vielzahl von Lichtquellen so angeordnet ist, um parallele Strahlen auszusenden.

19. Vorrichtung entsprechend jedem vorausgehenden Anspruch, worin die Lichtquellen (L1, L2, L3, L4) Laser-Dioden sind.

20. Vorrichtung entsprechend jedem vorausgehenden Anspruch, worin die Vielzahl von Fotoempfängern (D1, D2, D3, D4) lichtempfindliche Trommeln sind.

## Revendications

1. Appareil de formation d'images à couleurs multiples comprenant une pluralité de sources de lumière (L1,L2,L3,L4) servant à émettre une pluralité de faisceaux, une pluralité de photorécepteurs (D1,D2,D3,D4) pour recevoir des faisceaux respectifs et un multiplexeur optique (103) pour multiplexer, selon un multiplexage par répartition des longueurs d'onde, des faisceaux au début d'un trajet commun, le trajet commun étant disposé entre les sources de lumière (L1,L2,L3,L4) et les photorécepteurs (D1, D2,D3,D4), **caractérisé par** un démultiplexeur optique (108) pour démultiplexer les faisceaux à la fin du trajet commun .

2. Appareil selon la revendication 1, dans lequel le multiplexeur optique (103) comprend une pluralité de miroirs dichroïques (M1-1,M1-2,M1-3,M1-4).

3. Appareil selon la revendication 2, dans lequel les miroirs dichroïques (M1-1,M1-2,M1-3,M1-4) sont disposés suivant une rangée perpendiculaire aux faisceaux incidents.

4. Appareil selon la revendication 1, dans lequel le démultiplexeur optique (108) comprend une pluralité de miroirs dichroïques (M2-1,M2-2,M2-3,M2-4).

5. Appareil selon la revendication 1, dans lequel le multiplexeur optique (103) et le démultiplexeur optique (108) comprennent des éléments optiques (M1-1,M1-2,M1-3, M1-4,M2-1,M2-2,M2-3,M2-4) ayant des zones différentes de réflexion et de transmission conformément aux longueurs d'onde des faisceaux incidents respectifs.

6. Appareil selon la revendication 5, dans lequel les éléments optiques (M1-1,M1-2,M1-3,M1-4,M2-1,M2-2, M2-3,M2-4) comprennent chacun un verre transparent, qui est recouvert par un matériau dichroïque.

7. Appareil selon la revendication 1, dans lequel le multiplexeur optique (103) comprend une pluralité de filtres passe-bande.

8. Appareil selon la revendication 1, dans lequel le démultiplexeur optique (108) comprend une pluralité de filtres passe-bande.

9. Appareil selon la revendication 1, dans lequel le multiplexeur optique (103) est disposé entre la pluralité de sources de lumière (L1,L2,L3,L4) et le démultiplexeur optique (108).

10. Appareil selon l'une quelconque des revendications précédentes, comprenant des moyens de balayage (105) pour amener les faisceaux à réaliser un balayage des photorécepteurs respectifs (D1,D2,D3,D4), lesdits moyens de balayage (105) étant disposés dans le trajet commun.

11. Appareil selon la revendication 10, dans lequel le démultiplexeur optique (108) est disposé entre les moyens de balayage (105) et les photorécepteurs (D1,D2, D3, D4) .

12. Appareil selon la revendication 9 ou 10, dans lequel les moyens de balayage (105) comprennent un miroir polygonal (106).

13. Appareil selon la revendication 9, 10 ou 11, comprenant des capteurs (110) des faisceaux du système de synchronisation pour la détection d'un faisceau multiplexé selon un multiplexage par répartition des longueurs d'onde et reçu en provenance des moyens de balayage (105).

14. Appareil selon l'une quelconque des revendications précédentes, comprenant une pluralité de lentilles de collimation (C1,C2,C3,C4) pour collimater les faisceaux émis par les sources de lumière (L1,L2,L3,L4).

15. Appareil selon l'une quelconque des revendications 10 à 14, comprenant une lentille (104) pour focaliser la lumière délivrée par le multiplexeur optique (103) sur une surface réfléchissante des moyens de balayage (105).

16. Appareil selon l'une quelconque des revendications 10 à 15, comprenant une lentille (107) servant à focaliser la lumière réfléchie par les moyens de balayage (105) sur le démultiplexeur optique (108).

17. Appareil selon l'une quelconque des revendications 13 à 16, comprenant un élément optique (111) pour émettre ou réfléchir sélectivement la lumière, qui rencontre les capteurs (110) des faisceaux du système de synchronisation.

18. Appareil selon l'une quelconque des revendications précédentes, dans lequel la pluralité de sources de lumière sont disposées de manière à émettre des faisceaux parallèles.

19. Appareil selon l'une quelconque des revendications précédentes, dans lequel les sources de lumière (L1,L2,L3,L4) sont des diodes laser.

20. Appareil selon l'une quelconque des revendications précédentes, dans lequel la pluralité de photorécepteurs (D1,D2,D3,D4) sont des tambours photosensibles.
